# EUROPEAN PATENT APPLICATION

(11) **EP 3 726 466 A1**
(43) Date of publication of application: **21.10.2020**
(21) Application number: 19169136.9
(22) Date of filing: 15.04.2019
(51) Int. Cl.: G06T 7/11

(54) **AUTONOMOUS LEVEL IDENTIFICATION OF ANATOMICAL BONY STRUCTURES ON 3D MEDICAL IMAGERY**

(71) Applicant: Holo Surgical Inc., Chicago, IL 60609 (US)
(72) Inventor: Siemionow, Kris B., Chicago, IL Illinois 60610 (US); Luciano, Cristian J., Evergreen Park, IL Illinois 60805 (US); Trzmiel, Michal, 01-949 Warszawa (PL); Mejia Orozco, Edwing Isaac, 01-949 Warszawa (PL)
(74) Representative: Kancelaria Eupatent.pl Sp. z.o.o

(57) **Abstract**

A computer-implemented method for fully-autonomous level identification of anatomical structures within a three-dimensional (3D) medical imagery, the method comprising of: receiving (101) the 3D medical imagery comprising a set of medical scan images of the anatomical structures; processing (102) the set of medical scan images to perform an autonomous semantic segmentation of anatomical components and to store segmentation results; processing (103) segmentation results by removing the false positives, and smoothing 3D surfaces of the generated anatomical components; determining (105) morphological and spatial relationships of the anatomical components; processing (106) the set of medical scan images using a convolutional neural network (500) to autonomously assign an initial level type; assigning (107) the determined level type to each group of anatomical components by combining the determined morphological and spatial relationships with the determined initial level type; assigning (108) an ordinal identifier to each group of anatomical components to complement the assigned level type based on the relative distribution of the groups of anatomical components and their respective level types; and storing (109) information about the assigned levels with their ordinal identifier.

## Description

### TECHNICAL FIELD

The present disclosure generally relates to autonomous level identification of anatomical bony structures on three dimensional (3D) medical imagery, useful in particular for the field of computer assisted surgery, diagnostics, and surgical planning.

### BACKGROUND

Image guided or computer assisted surgery is a surgical procedure where the surgeon uses tracked surgical instruments in conjunction with preoperative or intraoperative images in order to indirectly guide the procedure. Image guided surgery can utilize images acquired intraoperatively, provided for example from computer tomography (CT) scanners.

Specialized computer systems can be used to process the CT images to develop three-dimensional models of the anatomy fragment subject to the surgery procedure.

For this purpose, various machine learning technologies are developed, such as a convolutional neural network (CNN) that is a class of deep, feed-forward artificial neural networks. CNNs use a variation of feature detectors and/or multilayer perceptrons designed to require minimal preprocessing of input data.

A publication "Hierarchical Segmentation and Identification of Thoracic Vertebra Using Learning-Based Edge Detection and Coarse-to-Fine Deformable Model" (by Jun Ma et al., Medical Image Computing and Computer-Assisted Intervention, MICCAI 2010, pp. 19-27) discloses a segmentation and identification of thoracic vertebrae based on learned bone-structure edge detectors and a coarse-to-fine deformable surface model to segment and identify vertebrae in 3D CT thoracic imagery. In the training stage, a discriminative classifier for object-specific edge detection is trained using steerable features and statistical shape models for 12 thoracic vertebrae are also learned. In the run-time, a coarse-to-fine, two-stage segmentation strategy is used: subregions of a vertebra first deforms together as a group; then vertebra mesh vertices in a smaller neighborhood move group-wise, to progressively drive the deformable model towards edge response maps by optimizing a probability cost function. Such an approach requires a dedicated edge detection algorithm and shape matching. The algorithm was tested only on thoracic spine and its accuracy varies based on the level and a number of vertebrae provided as an input.

So far, the image processing systems were not capable of efficiently providing level identification of bony structures on 3D medical imagery and, therefore, there is a need to provide improvements in this area.

### SUMMARY OF THE INVENTION

There is disclosed herein a computer-implemented method for fully-autonomous level identification of anatomical structures within a three-dimensional (3D) medical imagery, the method comprising of: receiving the 3D medical imagery comprising a set of medical scan images of the anatomical structures; processing the set of medical scan images to perform an autonomous semantic segmentation of anatomical components and to store segmentation results; processing segmentation results by removing the false positives, and smoothing 3D surfaces of the generated anatomical components; determining morphological and spatial relationships of the anatomical components; processing the set of medical scan images using a convolutional neural network to autonomously assign an initial level type; assigning the determined level type to each group of anatomical components by combining the determined morphological and spatial relationships with the determined initial level type; assigning an ordinal identifier to each group of anatomical components to complement the assigned level type based on the relative distribution of the groups of anatomical components and their respective level types; and storing information about the assigned levels with their ordinal identifier.

The anatomical structure can be a spine and the level type is a vertebral level type (C, T, L, S), to which an ordinal identifier (C1-C7, T1-T12, L1-L4, S1-S5) is assigned.

The determined morphological relationships of anatomical components may be their size and bounding box.

The determined spatial relationships of anatomical component may be their relative position and orientation.

The anatomical structure may be a spine, and determining morphological and spatial relationships among the anatomical components, may include in particular: determining pairs of pedicles; determining a vertebral body closest to or intersecting with each pair of pedicles; searching for anatomy parts intersecting with other components that were already assigned to the level; and repeating the previous steps for each level separately, excluding parts that were already assigned.

The method may further comprise providing a virtual 3D model, including the identified levels, as an augmented reality image with some of the levels shown and some other levels hidden.

The augmented reality image may further comprise implants corresponding to the levels shown.

The method may further comprise providing a visual representation of identified levels as labels displayed in the surgical field as an augmented reality image, with some of the labels shown and some other labels hidden.

There is also disclosed a computer-implemented system, comprising: at least one nontransitory processor-readable storage medium that stores at least one of processor-executable instructions or data; and at least one processor communicably coupled to at least one nontransitory processor-readable storage medium, wherein at least one processor is configured to perform the steps of the method of any of the previous claims.

These and other features, aspects and advantages of the invention will become better understood with reference to the following drawings, descriptions and claims.

### BRIEF DESCRIPTION OF DRAWINGS

Various embodiments are herein described, by way of example only, with reference to the accompanying drawings, wherein:
Fig. 1 shows a procedure for level identification;
Fig. 2A shows an example of a slice image of a bony structure;
Fig. 2B shows an example of a semantically segmented 3D spine model;
Fig. 2C shows an example of level identification neural network input with a predicted level type class (Sacrum) assigned;
Fig. 2D shows another example of level identification neural network input with a predicted level type class (Thoracic) assigned;
Fig. 3 shows a procedure of grouping levels from segmented anatomical components;
Fig. 4A shows pairs of pedicles;
Fig. 4B shows a pair of pedicles with assigned vertebral body;
Fig. 4C shows further assignment of other anatomical components;
Fig. 4D shows identified spine levels with ordinal names;
Fig. 5 shows a neural network architecture designed to distinguish vertebral level type;
Fig. 6A shows an augmented reality image with hidden levels;
Fig. 6B shows an augmented reality image with implants assigned to a shown levels;
Fig. 6C shows an augmented reality image with labels corresponding to identified and visible levels;
Fig. 7 shows the structure of a computer system for implementing the method of Fig. 1.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention.

The invention relates to processing images of a bony structure, for example a spine (including, in particular, specific sections: cervical, thoracic, lumbar, sacrum), as well as to other structures having a plurality of multiple anatomical components. The foregoing description will present examples related to a spine, but a skilled person will realize how to adapt the embodiments to be applicable to the other anatomical bony structures as well.

The aim of this procedure is to identify levels of a bony structure, i.e. adjacent groups of similar components of the anatomical structure, for example the vertebrae. Each vertebra can be considered as a level that comprises a plurality of anatomical parts, such as vertebral body 16, pedicles 15, transverse process 14, lamina 13, articular process 17, and spinous process 11.

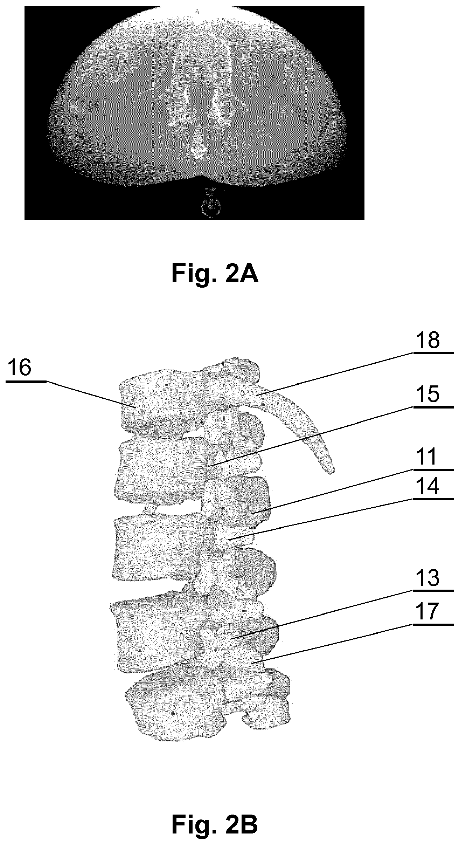

In the procedure of level identification, first, in step 101, a 3D scan volume is received, comprising a set of DICOM (Digital Imaging and Communications in Medicine) images of an anatomical bony structure, in this example - a spine, which is to be segmented, such as a set of CT (Computed Tomography) or MRI (Magnetic Resonance Imaging) scans. The set represents consecutive slices of the anatomical structure (such as one slice shown in Fig. 2A).

Next, the received images are processed in step 102 to perform autonomous segmentation of the anatomical structure to determine plurality of anatomical components, such as vertebral body 16, pedicles 15, transverse processes 14, lamina 13, articular process 17, spinous process 11 and ribs 18, as shown in Fig. 2B. This can be done by employing a method for segmentation of images disclosed in a European patent application EP17195826 by the present applicant or any other method that outputs a 3D model of the anatomical structure which is semantically segmented, as shown in Fig. 2B.

In step 103, the segmentation results generated in step 102 are processed to remove false positives after segmentation, and to check whether some anatomy components are connected together (and upon detection, disconnecting them) and smoothing the surface of the components (including simplification of the geometry and filling holes in the geometry). In case of a poor quality of the scan or spine defects, vertebral bodies or other anatomical components of different levels may appear to be connected with each other after the segmentation. For example, L5 and S1 vertebral bodies may be connected - in order to disconnect them, a combination of watershed and distance transform algorithms can be used to calculate separation lines in 3D.

Next, in step 104, geometrical parameters for each anatomical component are determined, including, at least, their relative positions, size, bounding box edges, and preferably also orientation based on semantic segmentation results and the moment of inertia.

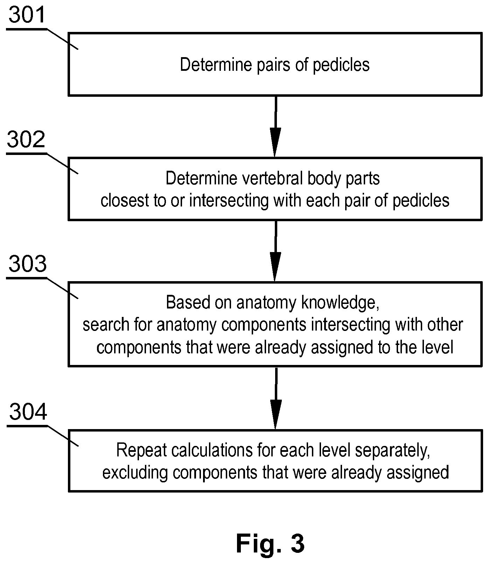

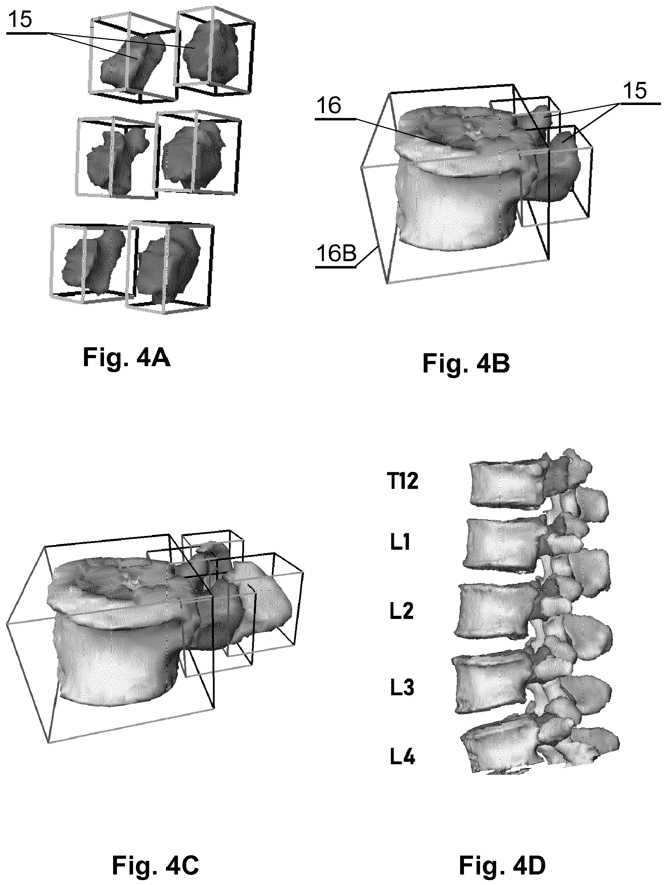

In step 105, each individual anatomical component is analyzed and assigned to a corresponding vertebral level by determining morphological and spatial relationships of the anatomical components. For example, this may be done by the procedure shown in Fig. 3 and supporting images of Figs. 4A-4D.

The pairs of pedicles 15 (each vertebra has two) are determined in step 301 (as shown in Fig. 4A). It can be estimated which pedicles correspond to separate levels by their location in space and relation between all other anatomy components. Then, for each spinal level, the closest (or intersecting) vertebral body 16, determined in step 302 is assigned, that is touching at least one of the pedicles as shown in Fig. 4B. In step 303, further assignment of other anatomy components to levels, such as transverse process 14, articular process 17, spinous process 11 and/or lamina 13, can be conducted with the same approach based on anatomical knowledge and geometrical analysis, as shown in Fig. 4C. This process shall be repeated for each level separately in step 304, excluding anatomical components that were already picked by other levels.

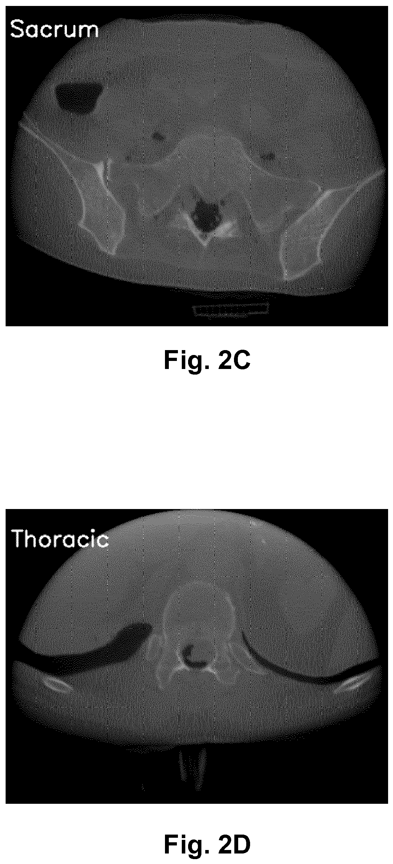

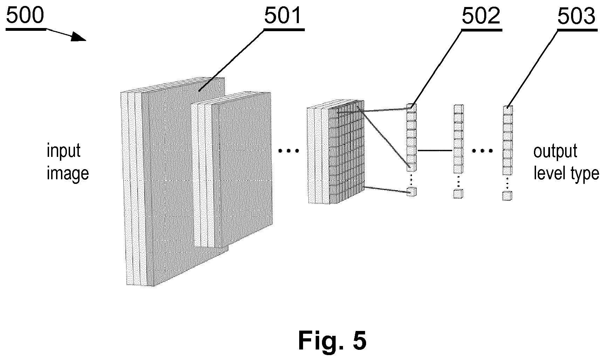

Next, prediction by means of a neural network is performed in step 106, to assign an initial classification of vertebral level type. For example, the following level types can be assigned: C (Cervical), T (Thoracic), L (lumbar), S (Sacral). A Convolutional Neural Network (CNN) architecture 500, as shown in Fig. 5, can be used for this purpose. The network performs vertebral type prediction on each DICOM slice, as shown in Fig 2C or 2D. The CNN 500 returns a probability map for each vertebral type class, for example, thoracic, sacrum or lumbar, in a way that the sum of individual probability components is always equal to one, and the biggest number explicitly suggests a predicted vertebral type.

The left side of the network 500 is a contracting path, which includes a plurality of convolution blocks 501 stacked together. Each convolution block comprises of two convolutional layers with optional batch normalization layer between them, followed up by a pooling layer. The last convolution block is directly connected to a plurality of dense, fully-connected layers 502 stacked together. The last fully-connected layer 503, which is considered as a network output layer, represents all possible vertebral type classes, where each type has its own neuron, for example, 3 neurons for vertebral types thoracic, sacrum or lumbar.

The convolution layers inside a block 501 can be of a standard kind, the dilated kind, or a combination thereof, with ReLU or leaky ReLU activation function attached.

Each fully-connected layer 502 can be preceded by a dropout layer, and each fully-connected layer can have a ReLU or leaky ReLU activation function attached.

Output layer 503 denotes a probability map for each output class (vertebral type) with a softmax activation function at the end.

The number of layers and the number of filters within layers, as well as dropout rate for dropout layers, is subject to change, depending on the requirements of the application. Deeper networks with more filters typically give results of better quality. However, there is a point at which increasing the number of layers/filters does not result in significant improvement, but significantly increases the computation time, making such a large network impractical.

Since the neural network model operates on individual slices and each level prepared in step 105 can be visible on plurality of slices, in step 107, the most frequent vertebral type class prediction is taken into consideration for each subvolume (spinal level) of DICOM scan. Therefore, in step 107, the level type (such as C, T, L or S) is assigned to each group of anatomical components by combining morphological and spatial relationships determined in step 105 with the type identification determined in step 106.

Next, in step 108, final counting and identification of vertebral components take place. Based on the orientation of the patient anatomy in the volumetric scandata, neural network prediction, and overall distribution of levels' types, proper indices are assigned to form a full identification of levels with an ordinal identifier assigned. For example, counting of lumbar vertebrae may start from L5 (or L6) if sacrum is included in the scanset, or from L1 if thoracic spine is included in the scanset. Therefore, an ordinal identifier is assigned in step 108 to each group of anatomical components represented by the level (C, T, L, S) determined in step 107, based on the anatomical structure and distribution of all the other levels - for example, the following identifiers may be assigned: C1-S5 or C1-C7, T1-T12, L1-L5, S1-S5.

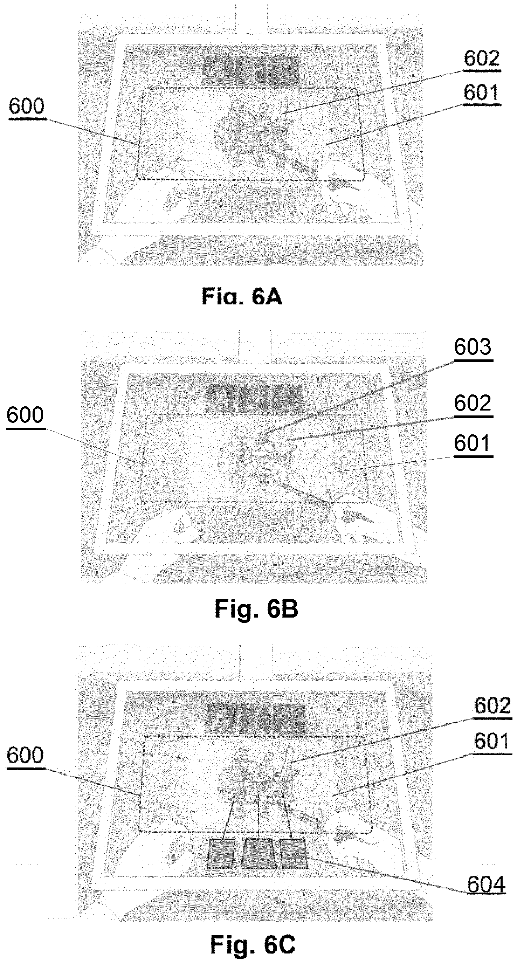

Once the level information on the model is known, virtual 3D model output is provided in step 109, which can be used to conveniently display any configuration of identified levels (and other components of the patient anatomy, such as nerves or surgical instruments (such as implants 603, Fig. 6B), to let the surgeon focus only on meaningful information that is necessary at a particular time during surgery. For example, the model is useful for providing an augmented reality image display in computer assisted surgery systems, wherein the virtual 3D model of the anatomy 600 is displayed over the real anatomy, wherein the information on the segments can be used to conveniently hide some of the levels 601 of segments that are not relevant for the surgery and display only the levels of interest 602, as shown for example in Fig. 6A. Moreover, the augmented reality image may be presented with labels 604 corresponding to the identified levels as shown in Fig. 6C.

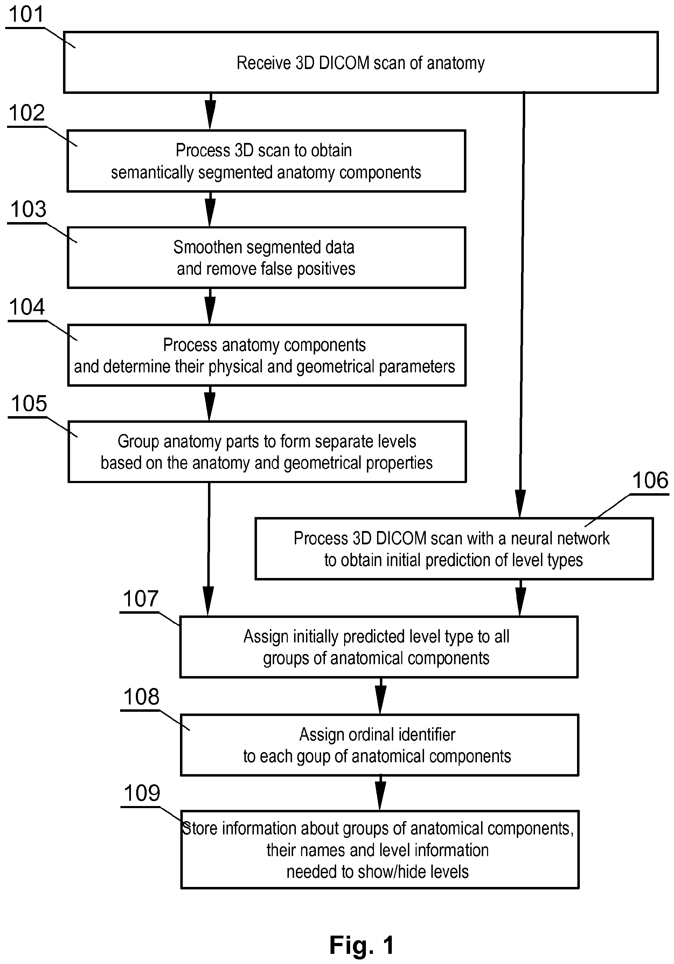

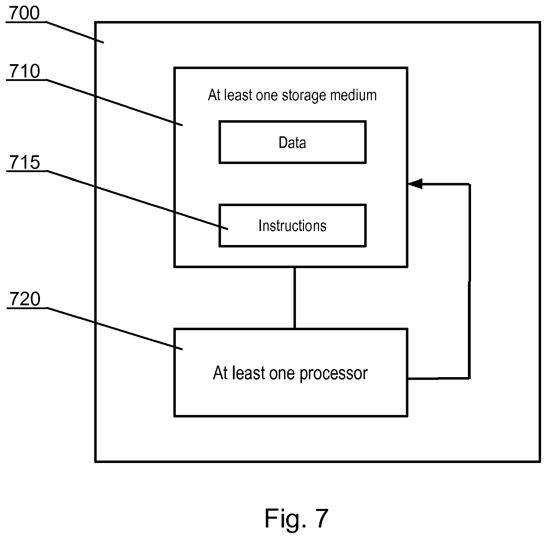

The functionality described herein can be implemented in a computer system 700, such as shown in Fig. 7. The system 700 may include at least one nontransitory processor-readable storage medium 710 that stores at least one of processor-executable instructions 715 or data; and at least one processor 720 communicably coupled to the at least one nontransitory processor-readable storage medium 710. The at least one processor 720 may be configured to (by executing the instructions 715) perform the procedure of Fig. 1.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A computer-implemented method for fully-autonomous level identification of anatomical structures within a three-dimensional (3D) medical imagery, the method comprising of:
- receiving (101) the 3D medical imagery comprising a set of medical scan images of the anatomical structures;
- processing (102) the set of medical scan images to perform an autonomous semantic segmentation of anatomical components and to store segmentation results;
- processing (103) segmentation results by removing the false positives, and smoothing 3D surfaces of the generated anatomical components;
- determining (105) morphological and spatial relationships of the anatomical components;
- processing (106) the set of medical scan images using a convolutional neural network (500) to autonomously assign an initial level type;
- assigning (107) the determined level type to each group of anatomical components by combining the determined morphological and spatial relationships with the determined initial level type;
- assigning (108) an ordinal identifier to each group of anatomical components to complement the assigned level type based on the relative distribution of the groups of anatomical components and their respective level types; and
- storing (109) information about the assigned levels with their ordinal identifier.

2. The method according to claim 1, wherein the anatomical structure is a spine and the level type is a vertebral level type (C, T, L, S), to which an ordinal identifier (C1-C7, T1-T12, L1-L4, S1-S5) is assigned.

3. The method according to any of previous claims, wherein the determined (104) morphological relationships of anatomical components are their size and bounding box.

4. The method according to any of previous claims, wherein the determined (104) spatial relationships of anatomical component are their relative position and orientation.

5. The method according to any of previous claims, wherein the anatomical structure is a spine, and determining (105) morphological and spatial relationships among the anatomical components, includes in particular:
- determining (301) pairs of pedicles;
- determining (302) a vertebral body closest to or intersecting with each pair of pedicles;
- searching (303) for anatomy parts intersecting with other components that were already assigned to the level; and
- repeating (304) the previous steps (301-303) for each level separately, excluding parts that were already assigned.

6. The method according to any of previous claims, further comprising providing a virtual 3D model, including the identified levels, as an augmented reality image (600) with some of the levels shown (602) and some other levels hidden (601).

7. The method according to claim 5, wherein the augmented reality image (600) further comprises implants (603) corresponding to the levels shown (602).

8. The method according to any of previous claims, further comprising providing a visual representation of identified levels as labels displayed in the surgical field as an augmented reality image (600), with some of the labels shown (604) and some other labels hidden.

9. A computer-implemented system, comprising:
- at least one nontransitory processor-readable storage medium (710) that stores at least one of processor-executable instructions or data; and
- at least one processor (720) communicably coupled to at least one nontransitory processor-readable storage medium, wherein at least one processor is configured to perform the steps of the method of any of the previous claims.
